# EUROPEAN PATENT APPLICATION

(11) **EP 4 002 125 A1**
(43) Date of publication of application: **25.05.2022**
(21) Application number: 20306399.5
(22) Date of filing: 18.11.2020
(51) Int. Cl.: G06F 11/34

(54) **DETERMINING A LOG LEVEL AFTER BEGINNING APPLICATION EXECUTION**

(71) Applicant: Hewlett-Packard Development Company, L.P., Spring TX 77389 (US)
(72) Inventor: Moraes, Mauricio Coutinho, 90619-900 Porto Alegre (BR); Mertz, Jhonny Marcos Acordi, 90619-900 Porto Alegre (BR); Connetable, Francois, 38053 Grenoble (FR)
(74) Representative: Bryers LLP

(57) **Abstract**

An example system includes an application engine comprising: log commands to write log entries to a buffer, a log entry including a level of preexisting levels ranked according to an order of verbosity. The example system further includes a log level engine to, after execution of the application engine has begun: receive the log entries from the buffer; determine a log level setting indicating a given verbosity of logging; write the log entries that meet the log level setting to a memory; and discard remaining log entries that do not meet the log level setting.

## Description

### BACKGROUND

A log level is generally set prior to execution of an application to store log entries to a memory.

### BRIEF DESCRIPTION OF THE DRAWINGS

Reference will now be made, by way of example only, to the accompanying drawings in which:
Figure 1 is a block diagram of an example system to determine a log level after beginning application execution.
Figure 2 a block diagram of another example system to determine a log level after beginning application execution.
Figure 3 is a flow diagram of an example method to determine a log level after beginning application execution.
Figure 4 is a block diagram of an example computer-readable medium including instructions that causes a processor to determine a log level after beginning application execution.
Figure 5 is an example of an application that includes log commands.
Figure 6 is an example of the system of Figure 2 implementing an example method to determine a log level after beginning application execution.
Figure 7 is an example of the system of Figure 2 continuing to implement the example method to determine a log level after beginning application execution.

### DETAILED DESCRIPTION

A log level is generally set prior to execution of an application to store log entries to a memory. For example, various logging output from an application is stored at a memory according to a log level that is set prior to execution of the application; such a memory may include a log database. A log level generally sets how many and/or which log entries an application stores at a log database. A "high" log level generally results in a relatively high number of log entries stored, providing a relatively high level of detail of behavior of the application stored; conversely, a "low" log level generally results in a relatively low number of log entries stored, providing a relatively low level of detail of behavior of the application stored. A log level set prior to execution may be too "high" such that many irrelevant log entries are stored at the database leading to inefficient use of large amounts of memory at the database; such a situation may occur when there are few problems with execution of the application such that the log entries generally indicate that the application is behaving normally, and/or with few and/or no errors and/or exceptions. Conversely, a log level set prior to execution may be too "low" such that not enough log entries are stored at the database to allow for debugging of the application, as problems with the application may not be discernible from the log entries.

Hence, according to the present specification, an application may be adapted to include log commands that write log entries to a buffer (e.g. rather than a log database). The log commands may be of different levels and hence may write different respective log entry levels (e.g. different log entry types) to the buffer.

However, log entries may be generated by an application in any suitable manner, of which log commands are but one example. For example, an application may generate log entries using other types of commands.

After execution of the application has begun, a log level engine and/or module may receive and/or retrieve the log entries from the buffer and determine a log level setting that indicates a given verbosity of logging (e.g. which log entries are to be stored). The log level setting may be based on a measured performance of the application after execution has begun, amongst other examples, described in more detail below, such that log entries that meet the log level setting may be written to a memory, such as a log database, while the remaining log entries are discarded and/or flushed. Hence, the log entry setting may set after execution of the application has begun, the log entry setting indicating which levels of log entries are to be stored and which are to be flushed. Setting the log level after execution of the application has begun may lead to more efficient storage of log entries at a memory.

An aspect of the present specification provides a system comprising: an application engine comprising: log commands to write log entries to a buffer, a log entry including a level of preexisting levels ranked according to an order of verbosity; and a log level engine to, after execution of the application engine has begun: receive the log entries from the buffer; determine a log level setting indicating a given verbosity of logging; write the log entries that meet the log level setting to a memory; and discard remaining log entries that do not meet the log level setting.

Another aspect of the present specification provides a method comprising: receiving, by a computing device, from an application, a response to a request received at the application from a requesting device; retrieving, by the computing device, after receiving the response, log entries from a buffer, the log entries written to the buffer by the application, a log entry including a level of preexisting levels ranked according to an order of verbosity; determining, by the computing device, a log level setting indicating a given verbosity of logging; writing, by the computing device, the log entries that meet the log level setting to a memory; and discarding, by the computing device, remaining log entries that do not meet the log level setting.

Another aspect of the present specification provides a non-transitory computer-readable medium comprising instructions that, when executed by a processor, cause the processor to: execute an application module to log commands to write log entries to a buffer, a log entry including a level of preexisting levels ranked according to an order of verbosity; execute a log level module to, after execution of the application module has begun: receive the log entries from the buffer; determine a log level setting indicating a given verbosity of logging; add time stamps to the log entries that meet the log level setting, the time stamps indicating a time of logging; write the log entries, including the time stamps, that meet the log level setting to a memory; and discard remaining log entries that do not meet the log level setting.

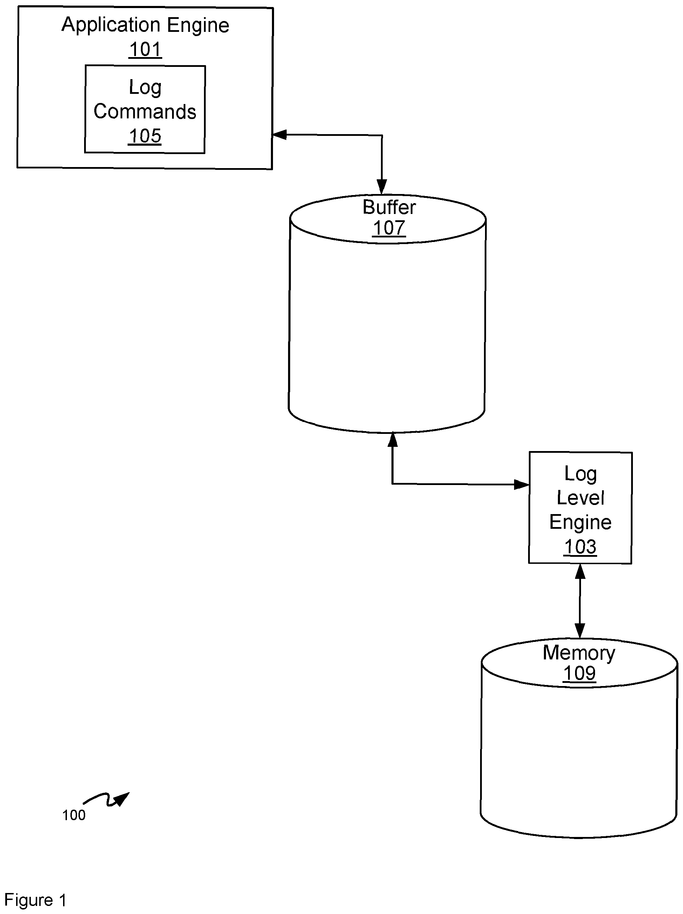

Figure 1 is a block diagram of an example system 100 to determine a log level after beginning application execution. The system 100 comprises an application engine 101 and a log level engine 103. The application engine 101 comprises: log commands 105 to write log entries to a buffer 107, a log entry including a level of preexisting levels ranked according to an order of verbosity. The log level engine 103 is to, after execution of the application engine 101 has begun: receive the log entries from the buffer 107; determine a log level setting indicating a given verbosity of logging; write the log entries that meet the log level setting to a memory 109; and discard remaining log entries that do not meet the log level setting. While the buffer 107 is depicted as being separate from the application engine 101, in other examples the buffer 107 may be a component of the application engine 101. Similarly, while the memory 109 is depicted as being separate from the log level engine 103, in other examples the memory 109 may be a component of the log level engine 103. The components of the system 100 are generally in communication via any suitable combination of wired and/or wireless communication links; communication links in the present specification are depicted as double-ended arrows between components.

As used herein, the term "engine" refers to hardware (e.g., a processor, such as a central processing unit (CPU) an integrated circuit or other circuitry) or a combination of hardware and software (e.g., programming such as machine- or processor-executable instructions, commands, or code such as firmware, a device driver, programming, object code, etc. as stored on hardware). Hardware includes a hardware element with no software elements such as an application specific integrated circuit (ASIC), a Field Programmable Gate Array (FPGA), etc. A combination of hardware and software includes software hosted at hardware (e.g., a software module that is stored at a processor-readable memory such as random access memory (RAM), a hard-disk or solid-state drive, resistive memory, or optical media such as a digital versatile disc (DVD), and/or implemented or interpreted by a processor), or hardware and software hosted at hardware.

For example, an application engine 101 may comprise hardware or a combination of software and hardware for implementing an application, such as a website, and the like. In some examples, an application engine 101 may comprise a portion of a server which hosts the application and/or the website. However, an application engine 101 may comprise hardware or a combination of software and hardware which correspond to any suitable application.

As will be described in more detail below, the log commands 105 may generally comprise commands and/or functions and/or engines and/or executable instructions, and the like, which return a log entry which may indicate behavior of the application engine 101 and/or of code segments thereof. For example, code segments may comprise portions and/or segments of code and/or source code and/or executable instructions, and the like, of an application executed when the application engine 101 is implemented, and the like.

While the log commands 105 will be described in more detail below, in some examples the log entries returned by the log commands 105 may comprise: input to the application engine 101 (e.g. string input and/or numerical input, and the like); text data and/or numerical data particular to a given log command 105; output from a code segment associated with a given log command 105; a line number of a log command 105; a time stamp indicating a time at which a log command 105 was executed; and the like. However, a log entry generally also includes an indication of a respective level of a log entry; such an indication of a level may comprise a textual identifier of a level.

For example, the log commands 105 may generally be of different levels (e.g. different types) that result in log entries of different levels being stored to the buffer 107 with a respective indication thereof. A log entry is hence stored at the buffer 107 in association with a respective level. Furthermore, a level is generally one of a number of preexisting levels ranked according to an order of verbosity. Hence, for example, the log level setting determined by the log level engine 103 may indicate a given level of the preexisting levels. When the log level setting indicates a highest level in the ranking of the preexisting levels, all log entries in the buffer 107 are stored in the memory 109. When the log level setting indicates a lowest level in the ranking of the preexisting levels, the lowest level log entries in the buffer 107 are stored in the memory 109, with other log entries above the lower level being discarded (e.g. not stored at the memory 109) and/or flushed from the buffer 107. When the log level setting indicates a given level in the ranking of the preexisting levels, that is between the highest level and the lowest level, log entries at the given level, and below the given level in the ranking, are stored in the memory 109, and log entries above the given level are discarded (e.g. not stored at the memory 109) and/or flushed from the buffer 107. Hence, the log level setting may indicate "verbosity" which may be understood to which levels of the log entries are to be stored, with a higher verbosity log level setting indicating that a higher number of log entries are to be stored as compared to a lower verbosity log level setting. Examples of log level settings and preexisting levels ranked according to an order of verbosity are described in more detail below.

It is further understood that the buffer 107 may comprise a volatile memory, while the memory 109 may comprise a non-volatile memory. Hence, the buffer 107 is to temporarily store log entries, while the memory 109 is to persistently store log entries.

It is understood that processing an application engine 101 may include controlling the hardware and/or software of the application engine 101 to implement and/or process an application and/or executable instructions of the application engine 101 which includes code segments.

For example, a service request may be received via a communications network and the like, for example from a requesting device and/or a client device, and the like. The service request may be to implement and/or process the application engine 101 (and/or an application thereof). The service request may comprise a HyperText Transfer Protocol (HTTP) request transmitted to a server implementing the application engine 101, for example to implement a website. An application engine 101 receives the service request and may responsively implement code segments of the application engine 101 and the log commands 105 (e.g. which store respective log entries at the buffer 107), and return a service response to the requesting device and/or a client device.

In some examples, the log level engine 103 may determine a log level setting by: receiving the log level setting from a user device, which may be the same or different as a requesting device which transmits a service request to the application engine 101.

In other examples, the log level engine 103 may determine the log level setting based on rules, and the like.

For example, the log level engine 103 may determine the log level setting based on measured performance of the application engine 101. Such a measurement may be based on a time for the application engine 101 to execute code segments thereof, and the like. However, such a measurement may be based on any suitable measurement including, but not limited to: load being handled by the application engine 101 (e.g. a number of concurrent requests and/or being handled by the application engine 101 from a number of different requesting devices); a response time for the application engine 101 to handle and/or process a service request; and the like. The log level engine 103 may hence determine the log level setting based on rules, and the like, for various measurements: for example, a rule may indicate a particular log level setting that is to be selected for a particular value of a particular measurement.

In particular examples, the log level engine 103 may determine the log level setting indicating the given verbosity of logging by: determining a response time of the application engine 101 generating a response (e.g. a service response) to a request (e.g. a service request); and determining the log level setting based on the response time (e.g. based on a respective rule). For example, longer response times (e.g. above a threshold time period) may result in a verbosity of the log level setting being increased, and shorter response times (e.g. below the threshold time period) may result in a verbosity of the log level setting being decreased. However, in other example, longer or shorter response times may result, respectively, in lower, or higher verbosity log level settings.

In further particular examples, the log level engine 103 may determine the log level setting indicating the given verbosity of logging by: determining a number of concurrent requests (e.g. concurrent service requests) being handled by the application engine 101; and determining the log level setting based on the number of the concurrent requests (e.g. based on a respective rule). Again, a verbosity of a log level setting may be increased or decreased depending on whether a number of concurrent requests is above or below a threshold number.

In further examples, the log level engine 103 may determine the log level setting based on a given log level in the log entries as received from the buffer 107. For example, a log entry may indicate a particular error that is occurring at the application engine 101, and the log level setting may be determined that includes the log entries that indicate the particular error being stored to the memory 109. For example, the log level engine 103 may include a rule that indicates that the log level setting is to be set a given log level (e.g. a log level setting of DEBUG, as described in more detail below) in response to determining that a log entry includes a particular given log level (e.g. such as ERROR, as described in more detail below, where a log level setting of DEBUG is a higher level, than an ERROR level, in preexisting levels ranked according to an order of verbosity, such that when the log level setting is set to DEBUG, log entries at the ERROR level are written to the memory 109).

In further examples, the log level engine 103 may determine the log level setting based on given text in the log entries as received from the buffer 107. For example, a log entry may include given text that indicates a particular behavior of the application engine 101, and the log level setting may be determined that includes the log entries that include given text that indicates the particular behavior being stored to the memory 109. For example, the log level engine 103 may include a rule that indicates that the log level setting is to be set a given log level in response to determining that a log entry includes a particular word; and/or the log level engine 103 may include another rule that indicates that the log level setting is to be set another given log level in response to determining that a first log entry includes a first particular word and a second log entry includes a second particular word. In a particular examples, the log level engine 103 may include a rule that sets the log level setting to DEBUG in response to determining that first log entry includes the word "exception" and a second log entry includes the word "user", and otherwise the log level setting is set to ERROR; in this example it is understood that the log level setting of DEBUG would cause the log level entries that include the words "exception" and "user" to be stored to the memory 109.

In further examples, the log level engine 103 may receive a service response from the application engine 101 (e.g. which may be forwarded to a requesting device that transmitted a service request that resulted in the service response), and determine the log level setting based on the service response. For example, a service response may include given text that indicates a particular behavior of the application engine 101, and the log level setting may be determined that includes the log entries that indicate the particular behavior being stored to the memory 109 (e.g. based on a particular rule).

In further examples, the log level engine 103 may retrieve log entries from the buffer 107 which may flush the buffer 107 and/or erase the retrieved log entries from the buffer 107 (e.g. regardless of whether the log entries that are retrieved are stored in the memory 109 or not). Put another way, retrieving log entries from the buffer 107 may flush the buffer 107 and/or erase the log entries from the buffer 107.

In some examples, the log level engine 103 may write the log entries that meet the log level setting to the memory 109 may write the log entries to a log file at the memory 109. Such a log file may be particular to the application engine 101 such that the log file may be later retrieved and the log entries therein be processed and/or analyzed to determine behavior of the application engine 101, for example by a user device operated by, and/or associated with, an administrator, and the like, of the system 100.

In some examples, the log level engine 103 may add time stamps to the log entries that meet the log level setting. The time stamps may indicate a time of logging. In these examples, the log level engine 103 may: write the log entries, including the time stamps, that meet the log level setting to the memory 109; and discard remaining log entries that do not meet the log level setting. For example, the log level engine 103 may: add the time stamps to the log entries that meet the log level setting by adding a respective time stamp to a respective log entry. However, in other examples, the log level engine 103 may: add the time stamps to the log entries that meet the log level setting by adding a respective time stamp to a batch of log entries being stored at the memory 109.

In some examples where the log level engine 103 adds time stamps to the log entries that meet the log level setting, the log level engine 103 may write the log entries that meet the log level setting to the memory 109 in an order of the time stamps.

In general, the log level engine 103 implements the above described functionality after execution of the application engine 101 has begun. In some examples, the log level engine 103 may implement the above described functionality after the application engine 101 has received a service request (e.g. and has begun execution), but before the application engine 101 has generated a service response (e.g. before the application engine 101 has completed execution). In other examples, the log level engine 103 may implement the above described functionality after the application engine 101 has been executing for a given time period (e.g. and the application engine 101 may have processed a plurality of service requests in the given time period) and/or periodically after the application engine 101 has begun executing and/or after the application engine 101 executed a given number of service requests. In some of these examples, the log level engine 103 implements the above described functionality after execution of the application engine 101 has occurred for a service request; in these examples, the log level engine 103 may determine a respective log level setting for a respective service request (e.g. independent of log level settings for other service requests). Put another way, the log level engine 103 may determine a respective log level setting per service request.

In some examples, the log level engine 103 may determine that execution of the application engine 101 has begun by receiving a service response to a service request. In other examples, the log level engine 103 may determine that execution of the application engine 101 has begun by determining that a log entry has been added to the buffer 107, which may indicate that the application engine 101 is executing a service request. In yet further examples, the log level engine 103 may determine that execution of the application engine 101 has begun by receiving (e.g. from the application engine 101) an indication that a service request has been received, and/or by receiving (e.g. from the application engine 101) an indication that execution of the application engine 101 has begun. In yet further examples, the log level engine 103 may determine that execution of the application engine 101 has begun by communicating with a requesting device that transmitted a service request.

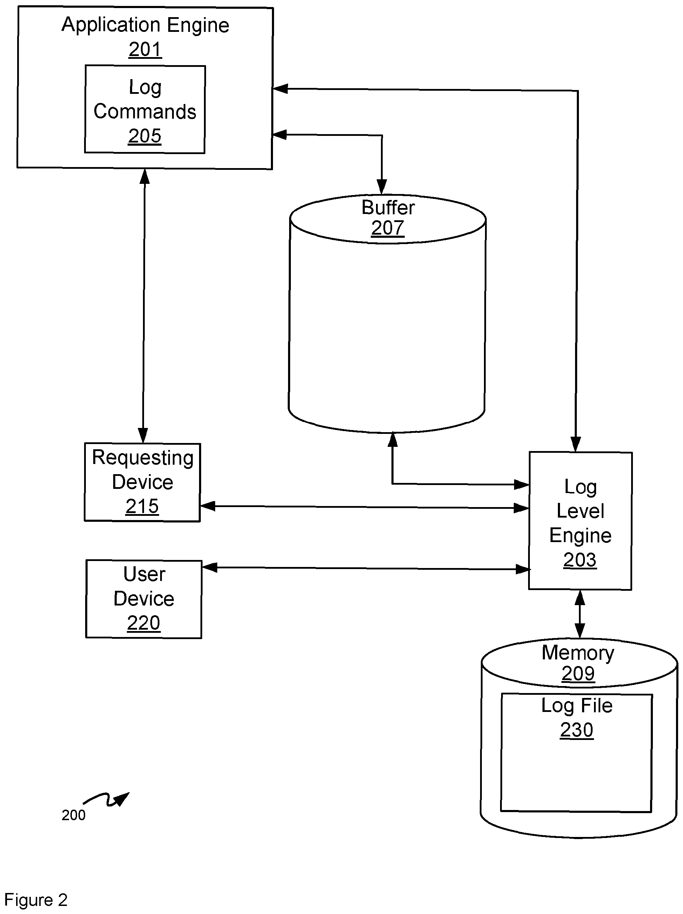

Attention is next directed to Figure 2 which is a block diagram of another example system 200 to determine a log level after beginning application execution. The system 200 is substantially similar to the system 100, with like components having like numbers, but in a "200" series rather than a "100" series.

For example, as depicted, the system 200 comprises: an application engine 201; a log level engine 203; log commands 205 at the application engine 201; a buffer 207; and a memory 209, which are respectively similar to: the application engine 101; the log level engine 103; the log commands 105; the buffer 107; and the memory 109, as described above.

In contrast to the system 100, however, the system 200 comprises a requesting device 215 to transmit service requests to the application engine 201, the requesting device 215 to receive service responses from the application engine 201 via the log level engine 203. Hence, in Figure 2, respective communication links are depicted between the requesting device 215, the application engine 201 and the log level engine 203. As such, in these examples, the log level engine 203 has access to information in service responses, which may be used to determine a log level setting, as described above.

Furthermore, a service response may indicate a time that a respective service request was received, which may be used, by the log level engine 203, to determine a response time of the application engine 201. In yet further examples, the log level engine 203 may determine a time that execution of the application engine 201 has begun by receiving the time in an indication from the application engine 201 (e.g. which may be different from a service response).

As also depicted in Figure 2, the system 200 comprises a user device 220 in communication with the log level engine 203. The user device 220 may be to set and/or control a log level setting at the log level engine 203, for example by transmitting a log level setting to the log level engine 203, such that the log level engine 203 receives the log level setting from the user device 220. The user device 220 may hence be associated with, and/or operated by, a user (e.g. such as an administrator, and the like, of the system 200) tasked with analyzing behavior of the application engine 201 which may include, but is not limited to, debugging the application engine 201, and the like. The user device 220 may be further used to control the log level engine 203 to automatically determine a log level setting, for example by the user device 220 providing to the log level engine a mapping (and/or mappings, not depicted) of text, and the like, in the log entries and/or service responses to associated log level settings to be selected (e.g. when the mapped text appears in the log entries and/or the and/or service responses), and the like.

As also depicted in Figure 2, the system 200 comprises a log file 230 stored at the memory 209. The log file 230 may be to store log entries for the application engine 201, as retrieved and stored by the log level engine 203 on the basis of a log level setting determined by the log level engine 203, as described above.

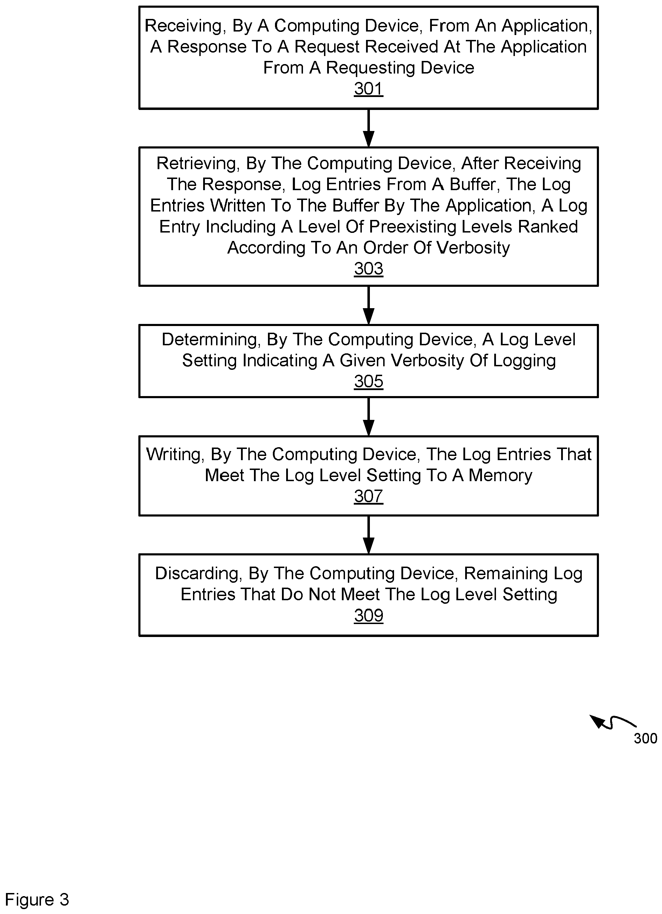

Referring to Figure 3, a flowchart of an example method 300 to implement a method to determine a log level after beginning application execution is depicted. In order to assist in the explanation of method 300, it will be assumed that method 300 may be performed with the system 200, and at least partially by a computing device implementing the system 200 and/or the log level engine 203, and/or a processor thereof. Indeed, the method 300 may be one way in which the system 200 and/or the log level engine 203 may be configured. Furthermore, the following discussion of method 300 may lead to a further understanding of the system 200, and its various components. Furthermore, it is to be emphasized, that method 300 may not be performed in the exact sequence as shown, and various blocks may be performed in parallel rather than in sequence, or in a different sequence altogether. Furthermore, it is to be emphasized that the method 300 may alternatively be performed with the system 100, and at least partially by a computing device implementing the system 100, and/or the log level engine 103, and/or a processor thereof.

Beginning at a block 301, a computing device receives, from an application (e.g. an application of the application engine 201), a response to a request received at the application from a requesting device. For example, the computing device implementing the log level engine 103 may receive a service response to a service request received at the application from the requesting device 215.

At a block 303, the computing device retrieves, after receiving the response, log entries from a buffer, the log entries written to the buffer by the application, a log entry including a level of preexisting levels ranked according to an order of verbosity. For example, the computing device implementing the log level engine 103 may retrieve, after receiving the response, log entries from the buffer 207, the log entries written to the buffer by the application (e.g. via the log commands 205), a log entry including a level of preexisting levels ranked according to an order of verbosity. Examples of such preexisting levels are described in more detail below.

Furthermore, as has already been described, retrieving the log entries from the buffer 207 may flush the buffer 207 (e.g. of the retrieved log entries) and/or erases the log entries (e.g. the retrieved log entries) from the buffer 207.

At a block 305, the computing device determines a log level setting indicating a given verbosity of logging, as described above. In particular examples, the computing device implementing the log level engine 103 may determine the log level setting indicating the given verbosity of logging by: determining a response time of the application generating the response; and determining the log level setting based on the response time. In other particular examples, the computing device may determine the log level setting indicating the given verbosity of logging by: determining a number of concurrent requests being handled by the application; and determining the log level setting based on the number of the concurrent requests. However, the computing device may determine the log level setting using any suitable process as described above, including, but not limited to, receiving the log level setting from the user device 220.

At a block 307, the computing device writes the log entries that meet the log level setting to a memory. For example, the computing device implementing the log level engine 103 may write the log entries that meet the log level setting to the memory 209 and/or the computing device may write the log entries that meet the log level setting to the log file 230 at the memory 209.

At a block 309, the computing device discards remaining log entries that do not meet the log level setting. For example, the computing device implementing the log level engine 103 may flush and/or erase the log entries that do not meet the log level setting. For example, the buffer 207 may be flushed and/or log entries that do not meet the log level setting may be erased at the buffer 207 and/or not stored at the memory 209.

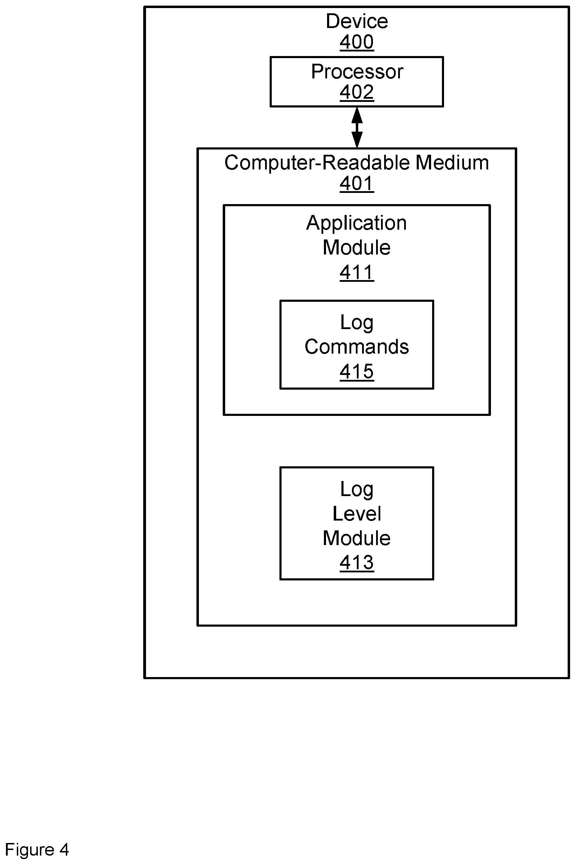

Figure 4 is a block diagram of an example device 400 that includes a computer-readable medium 401 and a processor 402. The computer-readable medium 401 includes instructions that, when implemented by the processor 402, cause the processor 402 to determine a log level after beginning application execution. The computer-readable medium 401 may be a non-transitory computer-readable medium, such as a volatile computer-readable medium (e.g., volatile RAM, a processor cache, a processor register, etc.), a non-volatile computer-readable medium (e.g., a magnetic storage device, an optical storage device, a paper storage device, flash memory, read-only memory, non-volatile RAM, etc.), and/or the like. The processor 402 may be a general-purpose processor or special purpose logic, such as a microprocessor (e.g., a central processing unit, a graphics processing unit, etc.), a digital signal processor, a microcontroller, an ASIC, an FPGA, a programmable array logic (PAL), a programmable logic array (PLA), a programmable logic device (PLD), etc. The computer-readable medium 401 or the processor 402 may be distributed among a plurality of computer-readable media or a plurality of processors.

The computer-readable medium 401 includes modules. As used herein, a "module" (in some examples referred to as a "software module") is a set of instructions that when executed or interpreted by a processor or stored at a processor-readable medium realizes a component or performs a method.

The computer-readable medium 401 may include an application module 411 and a log level module 413.

The application module 411 may include, as depicted, log commands 415, similar to the log commands 105, 205 as described above.

The application module 411 may include instructions that, when executed, cause the processor 402 to: write log entries to a buffer (e.g. the buffer 107 and/or the buffer 207), a log entry including a level of preexisting levels ranked according to an order of verbosity. The log entries may be generated using the log commands 415, but may otherwise be generated in any suitable manner.

In some examples, the preexisting levels may be ranked according to a descending order of verbosity. For example, six preexisting levels may be ranked in a descending order: TRACE, DEBUG, INFO, WARN, ERROR, and FATAL, where TRACE is a highest level, DEBUG is second highest level, etc., and FATAL is a lowest level. Such preexisting levels may comprise a standard log library levels, for example from a preexisting log library and/or from a preexisting standard log library. Furthermore, while the example preexisting levels are ranked in descending order, other example preexisting levels may be ranked in any suitable order.

Hence, for example, the log level setting determined by the log level module 413 may indicate a given level in the ranking. When the log level setting indicates a highest level in the ranking (e.g. TRACE), all log entries in the buffer 107 and/or buffer 207 may be stored in the memory 109 and/or memory 209. When the log level setting indicates a lowest level in the ranking (e.g. FATAL), the lowest level log entries in the buffer 107 and/or buffer 207 may be stored in the memory 109 and/or memory 209, while other log entries above the lower level are discarded (e.g. not stored at the memory 109 and/or memory 209) and/or flushed from the buffer 107 and/or buffer 207. When the log level setting indicates a given level in the ranking that is between the highest level and the lowest level (e.g. DEBUG or INFO or WARN or ERROR), log entries at the given level, and below the given level in the ranking, may be stored in the memory 109 and/or memory 209, and log entries above the given level are discarded (e.g. not stored at the memory 109 and/or memory 209) and/or flushed from the buffer 107 and/or buffer 207.

The log level module 413 may include instructions that, when executed, cause the processor 402 to: after execution of the application module 411 has begun: receive the log entries from the buffer (e.g. as stored by the application module 411); determine a log level setting indicating a given verbosity of logging; add time stamps to the log entries that meet the log level setting, the time stamps indicating a time of logging; write the log entries, including the time stamps, that meet the log level setting to a memory (e.g. the memory 109 and/or the memory 209); and discard remaining log entries that do not meet the log level setting.

Furthermore, the time stamps may be used (e.g. by the user device 220) to analyze behavior of the respective log entries.

For example, the log level module 413 may be to further cause the processor 402 to: write the log entries that meet the log level setting to the memory in an order of the time stamps, such that processing and/or analysis of the log entries by time may omit ordering of the time stamps (e.g. as such ordering has already occurred).

Furthermore, the log level module 413 may be to further cause the processor 402 to: add the time stamps to the log entries that meet the log level setting by adding a respective time stamp to a respective log entry, for example on a one-to-one basis. Alternatively, the log level module 413 may be to further cause the processor 402 to: add the time stamps to the log entries that meet the log level setting by adding to a batch of log entries being stored at the memory 109 (e.g. for a particular execution of the application module 411).

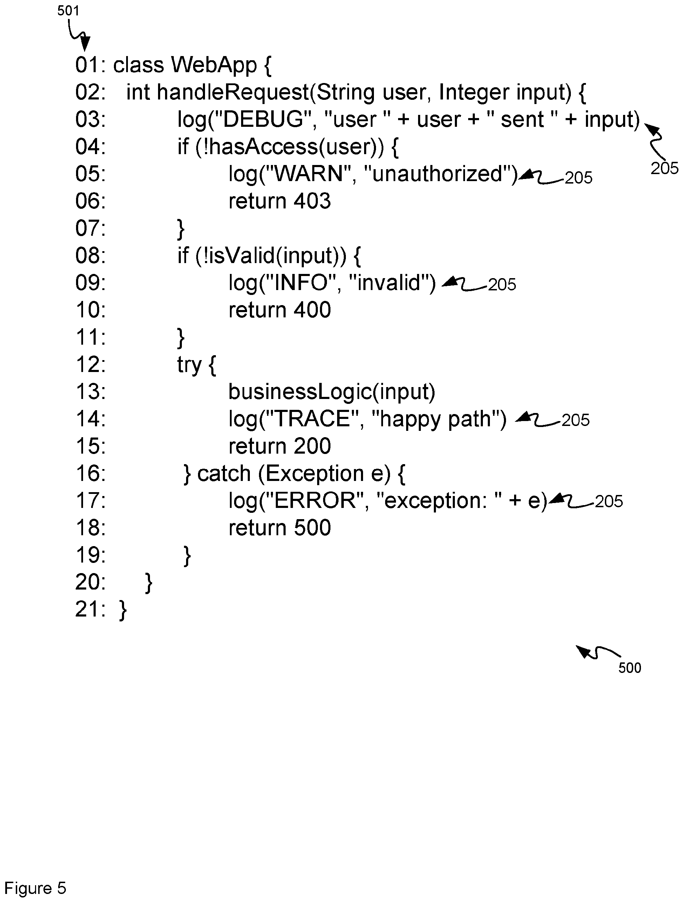

An example of code segments and log commands 205 of an application are next described with respect to Figure 5. In particular, Figure 5 depicts a code snippet 500 in Java-like code. Various functions, and other parts of the code snippet 500, are on various lines indicated by line numbering 501. The code snippet 500 may be an example of code segments and log commands 205 of the application engine 101, the application engine 201 and/or an application module 411. While log commands 205 are depicted in specific locations in the code snippet 500, the log commands 205 may be located in any suitable location, and may be added manually and/or automatically.

The code snippet 500 generally performs an authorization of a user based on an input string "user" received, along with an integer input "input", for example in a service request to process the code snippet 500 (e.g. a service request to process the application engine 101, the application engine 201 and/or the application module 411).

The code snippet 500 performs an authorization of the input string "user" for example by determining whether the input string "user" is authorized to access and/or use the code snippet 500, for example as stored in a database, and the like (e.g. via a function "!userAccess(user)". If the input string "user" is not authorized and/or does not have access, an error code "403" is returned. However, if the input string "user" is authorized and/or has access, the code snippet 500 determines whether the integer input "input" is valid via a function (e.g. via a function "!isValid(input)". If the integer input "input" is not valid, an error code "400" is returned. If the integer input "input" is valid, the code snippet "tries" to implement a function "business logic(input)" (e.g. via a function "try"). If the function "business logic(input)" is successfully implemented, a code "200" is returned; otherwise a function "catch" is implemented to determine an "Exception" (e.g. an error) that has occurred, as indicated by a variable "e" returned by the function "catch", and an error code "500" is returned

Each of the depicted functions may correspond to a code segment, and/or branches of the code snippet 500 that include a depicted function may correspond to a code segment.

As depicted, the code snippet 500 further comprises log commands 205, for example a function and/or command "log" which include a first field that indicates a respective level thereof, as well as a second field indicating a syntax of log entries returned by a respective "log" command.

For example, the command "log" at line 03 has a first field indicating a level "DEBUG", and a second field ""user" + user + " sent" + input" indicating that a log entry generated by the function "log" at line 03 concatenates text "user " with the string input "user", text" sent", and the integer input "input". Furthermore, the command "log" at line 03 stores a corresponding log entry at the buffer 107, and/or the buffer 207, whenever the code snippet 500 executes.

Similarly, the command "log" at line 05 has a first field indicating a level "WARN", and a second field "unauthorized" indicating that a log entry generated by the function "log" at line 05 comprises the text "unauthorized". Furthermore, the command "log" at line 05 stores a corresponding log entry at the buffer 107, and/or the buffer 207, when the string input "user" is determined not to access have by the function "!userAccess(user)".

Similarly, the command "log" at line 09 has a first field indicating a level "INFO", and a second field "invalid" indicating that a log entry generated by the function "log" at line 09 comprises the text "invalid". Furthermore, the command "log" at line 09 stores a corresponding log entry at the buffer 107, and/or the buffer 207, when the integer input "input" is determined to be invalid by the function "!isValid(input)".

Similarly, the command "log" at line 14 has a first field indicating a level "TRACE", and a second field "happy path" indicating that a log entry generated by the function "log" at line 14 comprises the text "happy path". Furthermore, the command "log" at line 14 stores a corresponding log entry at the buffer 107, and/or the buffer 207, when the function businessLogic(input) successfully executes.

Similarly, the command "log" at line 17 has a first field indicating a level "ERROR", and a second field ""exception: " + e" indicating that a log entry generated by the function "log" at line 17 concatenates the text "exception:" with a value of the variable "e" returned by the function "catch". Furthermore, the command "log" at line 17 stores a corresponding log entry at the buffer 107, and/or the buffer 207, when the function businessLogic(input) does not successfully execute.

Regardless, the respective log entries returned by the commands "log" are temporarily stored at the buffer 107 and/or the buffer 207. Furthermore, as the commands "log" are located in different branches and/or at different code snippets, the log entries generally indicate behavior of the code snippet 500, including, but not limited to, when failures occur due to a "user" not being authorized and/or not having access, "input" being invalid, a failure of business logic, and the like.

In some examples, the log entries returned by the respective commands "log" may also include a respective line number of a command "log", and/or a time stamp of execution of a respective command "log".

Furthermore, the code snippet 500 and/or the commands "log" (and, for example, the application engines 101, 201 and/or the application module 411, and/or the log commands 105, 205, 415) may be controlled to write the log entries to any suitable location such as the buffer 107 and/or the buffer 207. For example, the application engines 101, 201 and/or the application module 411, and/or the log commands 105, 205, 415 and/or the code snippet 500 and/or the commands "log" may be enabled to write log entries to a proxy. The buffer 107 and/or the buffer 207 may set as such a proxy. Setting such a proxy may occur in the system 100 and/or the system 200 and/or at the device 400 and/or by a device executing the code snippet 500.

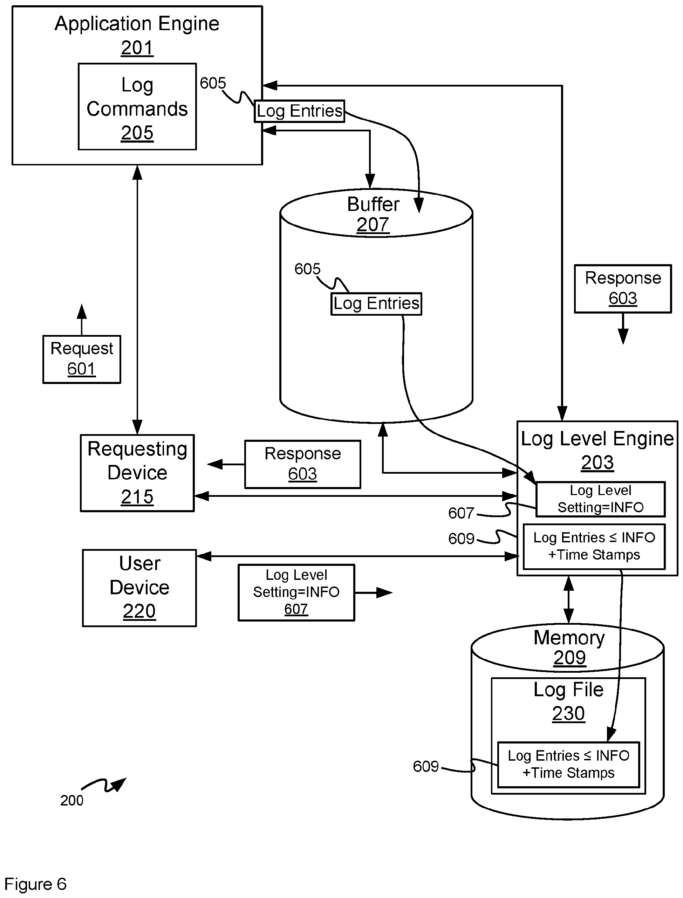

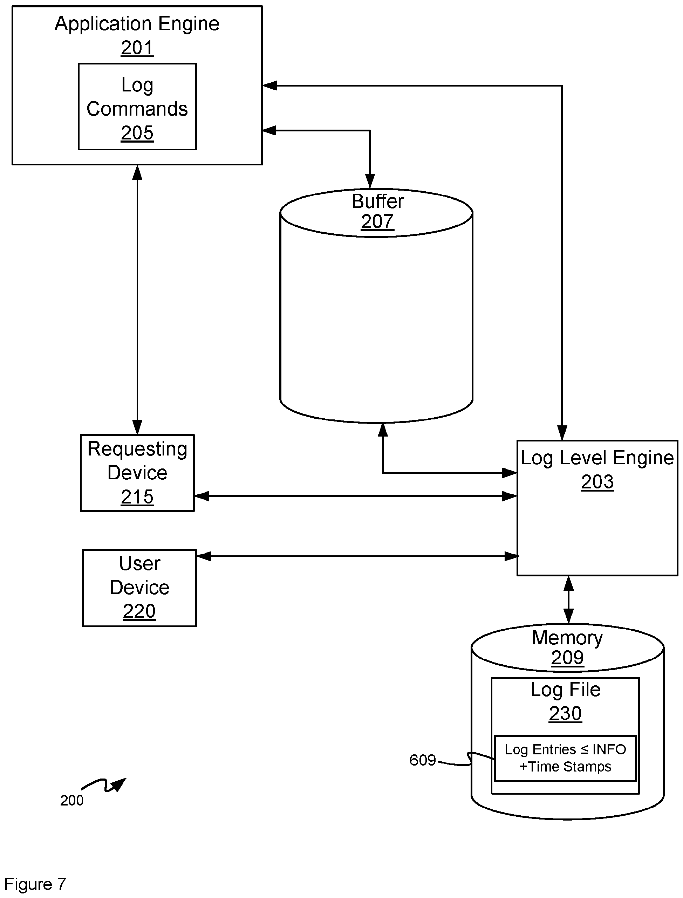

Attention is next directed to Figure 6 and Figure 7 which depicts an example of operation of the system 200 and in particular an example of the method 300 being implemented at the system 200. Figure 6 and Figure 7 are substantially similar to Figure 2, with like components having like numbers.

As depicted, the requesting device 215 transmits a service request 601 to the application engine 201 which responsively executes (e.g. a respective application is executed) and generates a service response 603 to the requesting device 215 via the log level engine 203. During execution of the application engine 201, log entries 605 are generated and stored at the buffer 207.

The log level engine 203 receives (e.g. at the block 301 of the method 300) the service response 603 and retrieves (e.g. at the block 303 of the method 300) the log entries 605 from the buffer 207. The retrieval of the log entries 605 may occur in response to the log level engine 203 receiving the service response 603 as an indication that execution of the application engine 101 has begun. The level engine 203 transmits the service response 603 to the requesting device 215, which receives the service response 603 as a response to the service request 601.

As depicted, the log level engine 203 determines (e.g. at the block 305 of the method 300) a log level setting 607 for example by receiving the log level setting 607 from the user device 220. Furthermore, the log level setting 607 may be determined in any suitable manner, as described herein, other than receiving the log level setting 607 from the user device 220. A determination of the log level setting 607 may occur before or after the service response 603 is received. As depicted, the log level setting 607 has been determined to be "INFO" which may be, for example, a level of a preexisting levels (e.g. TRACE, DEBUG, INFO, WARN, ERROR, and FATAL) ranked according to an order of verbosity.

As depicted, the log level engine 203 writes (e.g. at the block 307 of the method 300) log entries 609 that meet the log level setting to the memory 209. For example, the log entries 605 having a log level of INFO, WARN, ERROR and FATAL are selected as the log entries 609 (e.g. as WARN, ERROR and FATAL are levels "below" the log level setting of INFO). Put another way, the log entries 609 comprise a subset of the log entries 605 at the level INFO, and below the level INFO (e.g. in a ranking of preexisting levels ranked according to an order of verbosity).

As depicted, the log level engine 203 optionally adds time stamps to the log entries 609 and writes the log entries 609, with the time stamps, to the log file 230 at the memory 209. The log level engine 203 discards (e.g. at the block 309 of the method 300) remaining log entries 605 that do not meet the log level setting 607.

Hence, with reference to Figure 7, after the log level engine 203 writes the log entries 609 that meet the log level setting 607 to the memory 209 and discards remaining log entries 605 that do not meet the log level setting 607, the log entries 609 that meet the log level setting 607 are stored at the log file 230 at the memory 209, and the buffer 207 has been flushed and/or no longer stores the log entries 605. For example, log entries 605 having a log level of TRACE and DEBUG are discarded (e.g. as TRACE and DEBUG are levels "above" the log level setting of INFO).

It should be recognized that features and aspects of the various examples provided above may be combined into further examples that also fall within the scope of the present disclosure.

## Claims

1. A system comprising:
an application engine comprising: log commands to write log entries to a buffer, a log entry including a level of preexisting levels ranked according to an order of verbosity; and
a log level engine to, after execution of the application engine has begun: receive the log entries from the buffer; determine a log level setting indicating a given verbosity of logging; write the log entries that meet the log level setting to a memory; and discard remaining log entries that do not meet the log level setting.

2. The system of claim 1, wherein the log level engine is further to determine the log level setting by: receiving the log level setting from a user device.

3. The system of claim 1, wherein the log level engine is further to determine the log level setting based on a measured performance of the application engine.

4. The system of claim 1, wherein the log level engine is further to determine the log level setting based on a given log level in the log entries as received from the buffer.

5. The system of claim 1, wherein the log level engine is further to determine the log level setting based on given text in the log entries as received from the buffer.

6. A method comprising:
receiving, by a computing device, from an application, a response to a request received at the application from a requesting device;
retrieving, by the computing device, after receiving the response, log entries from a buffer, the log entries written to the buffer by the application, a log entry including a level of preexisting levels ranked according to an order of verbosity;
determining, by the computing device, a log level setting indicating a given verbosity of logging;
writing, by the computing device, the log entries that meet the log level setting to a memory; and
discarding, by the computing device, remaining log entries that do not meet the log level setting.

7. The method of claim 6, wherein the retrieving the log entries from the buffer flushes the buffer or erases the log entries from the buffer.

8. The method of claim 6, wherein the writing the log entries that meet the log level setting to the memory comprises: writing the log entries to a log file at the memory.

9. The method of claim 6, wherein determining the log level setting indicating the given verbosity of logging comprises:
determining a response time of the application generating the response; and
determining the log level setting based on the response time.

10. The method of claim 6, wherein determining the log level setting indicating the given verbosity of logging comprises:
determining a number of concurrent requests being handled by the application; and
determining the log level setting based on the number of the concurrent requests.

11. A non-transitory computer-readable medium comprising instructions that, when executed by a processor, cause the processor to:
execute an application module to log commands to write log entries to a buffer, a log entry including a level of preexisting levels ranked according to an order of verbosity;
execute a log level module to, after execution of the application module has begun: receive the log entries from the buffer; determine a log level setting indicating a given verbosity of logging; add time stamps to the log entries that meet the log level setting, the time stamps indicating a time of logging; write the log entries, including the time stamps, that meet the log level setting to a memory; and discard remaining log entries that do not meet the log level setting.

12. The non-transitory computer-readable medium of claim 11, wherein the log level module is to further cause the processor to: write the log entries that meet the log level setting to the memory in an order of the time stamps.

13. The non-transitory computer-readable medium of claim 11, wherein the log level module is to further cause the processor to: add the time stamps to the log entries that meet the log level setting by adding a respective time stamp to a respective log entry.

14. The non-transitory computer-readable medium of claim 11, wherein the preexisting levels are ranked according to a descending order of verbosity.

15. The non-transitory computer-readable medium of claim 11, wherein the preexisting levels comprise standard log library levels.
